# EUROPÄISCHE PATENTSCHRIFT

(11) **EP 2 679 098 B1**
(45) Veröffentlichungstag und Bekanntmachung des Hinweises auf die Patenterteilung: **09.08.2017**
(21) Anmeldenummer: 12173540.1
(22) Anmeldetag: 26.06.2012
(51) Int. Cl.: A23C 1/04, A23C 3/03, A23C 9/142

(54) **MILCHPULVER MIT HOHEM MOLKENPROTEININDEX**
MILK POWDER HAVING A HIGH WHEY PROTEIN INDEX
LAIT EN POUDRE AYANT UN INDICE ÉLEVÉ DES PROTÉINES DE LACTOSÉRUM SOLUBLES

(43) Veröffentlichungstag der Anmeldung: 01.01.2014
(73) Patentinhaber: DMK Deutsches Milchkontor GmbH, 28199 Bremen (DE)
(72) Erfinder: Döring, Sven-Rainer, 27404 Zeven (DE)
(74) Vertreter: Fabry, Bernd

(56) Entgegenhaltungen:
- WO-A1-2009/150183
- DE-A1-102010 037 550
- DE-C1- 10 036 085
- DATABASE WPI Week 201180 Thomson Scientific, London, GB; AN 2011-P36159 XP002680296, & CN 102 217 674 A (INST AGRO FOOD SCI&TECHNOLOGY CHINESE) 19. Oktober 2011 (2011-10-19)
- SCHUCK ET AL.: "Déshydratation des laits enrichis en caséine micellaire par microfiltration; comparaison des propriétés des poudres obtenues avec celles d'une poudre de lait ultra-propre", LAIT, Nr. 74, 1994, Seiten 47-63, XP002680297,

## Beschreibung

### Gebiet der Erfindung

Die Erfindung befindet sich auf dem Gebiet Milchprodukte und betrifft ein neues Verfahren zur Herstellung von keimarmen Vollmilchpulvern mit hohem Molkenproteinindex (MPI)

### Stand der Technik

Zur Herstellung von keimarmen Milchpulvern wird beispielsweise bereits pasteurisierte Magermilch mit etwa 9 % Trockenmasse auf eine Konzentration von etwa 40 % eingedampft. Die Konzentrate enthalten jedoch noch eine große Menge an thermoresistenten Keimen und Sporen, insbesondere aus der Maissilage, mit denen die Kühe gefüttert werden und die infolge nicht ausreichender Stallhygiene schließlich in der Rohmilch landen. Aus diesem Grunde ist es bislang erforderlich, die Konzentrate vor dem Versprühen einer Hocherhitzung zu unterwerfen, mit deren Hilfe die Keime und Sporen quantitativ zerstört werden und aus der ein keimfreies und hochqualitatives Produkt resultiert.

Allerdings wirkt sich die Hocherhitzung nicht nur auf die Keime und Sporen aus, es werden auch die wertvollen Molkenproteine ganz oder ganz überwiegend denaturiert und damit das Produkt in seiner Funktionalität und Ernährungsphysiologie nachteilig verändert. Molkenproteine gehören zu den Albuminen und Globulinen; dazu zählen insbesondere das alpha-Lactalbumin und das beta-Lactoglobulin, Serumalbumin, Proteosepepton und die Immunoglobuline. Molkenproteine stellen ernährungsphysiologisch betrachtet hochwertige Milchbestandteile dar und dienen beispielsweise in Eiweißpräparaten speziell zum Muskelaufbau. Während unbehandelte Magermilch als Maßzahl für den Gehalt an Molkenproteinen einen so genannten Molkenproteinindex (MPI, englisch WPNI) oberhalb von 6, speziell von 6,1 aufweist, nimmt dieser bei der üblichen Ultrahocherhitzung auf Werte unter 1 ab, was ausgesprochen unerwünscht ist.

Eine Alternative würde darin bestehen, die Temperaturbehandlung bei niedrigeren Temperaturen, etwa bei 70 °C anstelle von über 100 °C durchzuführen. In der Tat weisen die so erhaltenen Produkte einen MPI/WPNI oberhalb von 5 auf, allerdings ist die Keimbelastung so hoch, dass Produkte erhalten werden, die allenfalls eingeschränkt verkaufsfähig sind.

Die Aufgabe der vorliegenden Erfindung hat somit darin bestanden, Vollmilchpulver zur Verfügung zu stellen, die sowohl keimfrei bzw. keimarm sind, wie sie bisher nur nach den Hochtemperaturverfahren erhalten werden, als auch einen hohen MPI/WPNI von mindestens 2, speziell mindestens 4 und insbesondere 5,5 bis 6 zur Verfügung zu stellen, wie sie aus Niedrigtemperaturverfahren erhalten werden, obwohl diese beiden Parameter bislang stets einen entgegengesetzten Verlauf zeigen. Das Verfahren sollte zudem mit geringem technischem Aufwand durchführbar sein.

### Beschreibung der Erfindung

Ein Verfahren zur Herstellung keimarmer Milchpulver mit einem Molkenproteinindex (MPI/WPNI) von mindestens 2, speziell mindestens 4 und insbesondere 5 bis 7 wird beschrieben, bei dem man
(a) Rohmilch in an sich bekannter Weise von Feststoffen befreit, den Rahm abtrennt,
(b) die so erhaltene Magermilch einer Mikrofiltration unterwirft,
(c) das so erhaltene Permeat pasteurisiert,
(c) das so erhaltene pasteurisierte Permeat auf eine Trockenmasse von 30 bis 50 Gew.-% konzentriert und das Retentat verwirft,
(d) das so erhaltene Konzentrat einer Temperaturbehandlung über einen Zeitraum von mindestens 15 und vorzugsweise 15 bis 20 Sekunden bei mindestens 72 und vorzugsweise 72 bis 80 °C unterwirft, und
(e) das so erhaltene temperaturbehandelte Produkt zu einem trockenen Pulver verarbeitet.

Überraschenderweise wurde gefunden, dass die Abtrennung der Keime aus der Milch durch Mikrofiltration quantitativ erfolgen kann und somit im Anschluss keine Ultrahocherhitzung mehr erforderlich ist. Die Pasteurisierung kann grundsätzlich auch vor der Filtration erfolgen, im Hinblick auf eine möglichst vollständige Entkeimung ist die nachgelagerte Pasteurisierung indes deutlich bevorzugt. Im Fall einer Warmfiltration empfiehlt es sich, das Verfahren so auszulegen, dass jeweils eine Mikrofiltrationsanlage betrieben und die andere gereinigt wird.

Um das Milchkonzentrat auf eine Temperatur zu bringen, bei der es versprüht werden kann, reichen Temperaturen im Bereich von 70 °C aus, bei denen noch keine Molkenproteine denaturieren. Das Verfahren ist technisch einfach durchzuführen und liefert das gewünschte keimarme Produkt mit hohem MPI/WPNI. In der folgenden Tabelle A sind die typischen Spezifikationserfordernisse für ein keimarmes Milchpulver sowie die mit dem beschriebenen Verfahren erzielten Ergebnisse zusammengefasst:

**Tabelle A**

| Spezifikation keimarmes Pulver | | | |
|---|---|---|---|
| **Keimart** | **Methode** | **Anforderung** | **Erfindung** |
| Mesophile Sporen | 10 min 80°C / 30°C | max. 500/g | 2000/g |
| Thermophile Sporen | a) 10 min 80°C / 55°C | max. 500/g | 3000/g |
| | b) 30 min 100°C / 55°C | | |
| Bacillus Cereus | 10 min 80°C / 30°C selektiver Nährboden | < 10/g | < 100/g |
| Thermophile Keime | 55°C | max. 500/g | 4000/g |

**Tabelle A**

| Spezifikation keimarmes Pulver (Fortsetzung) | | | |
|---|---|---|---|
| **Keimart** | **Methode** | **Anforderung** | **Erfindung** |
| Sulfitreduzierende Sporen | 10 min 80°C / 37°C (MPN Selektivbouillon) | max. 10/g | < 10/g |
| Clostridium perfringens | 10 min / 80°C | max.10/g bis neg/g | < 10/g |
| Salmonella | LFGB § 64 modf. | neg in 750 - 1500g | neg in 750 - 1500g |
| Enterobacter sakazakii | Selektivnährboden | neg in 375 - 750g | neg in 375g |

### Pasteurisierung

Die Wärmebehandlung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

Die Abtrennung von Feststoffen ("Käsestaub") sowie die Entrahmung des Fettanteils von etwa 4 Gew.-% erfolgt üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können (http://www.westfalia-separator.com/de/anwendungen/molkereitechnik/milch-molke.html). Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### Mikrofiltration

Die Mikrofiltration ist ein Verfahren zur Stoffabtrennung. Der wesentliche Unterschied zwischen der Mikro- und der Ultrafiltration liegt in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Ultrafiltration genannt, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind.

In der Milchtechnik hat bislang das Vorurteil geherrscht, zur Abtrennung von Mikroorganismen und Fettbestandteilen in der Rohmilch dürfe der Porendurchmesser einen Wert von 0,5 µm nicht unterschreiten. Die Erfindung schließt jedoch die Erkenntnis ein, dass zur Herstellung einer Rohmilch der Güteklasse I ein Durchmesser im Bereich von 1,1 bis sogar 2 µm und vorzugsweise 1,3 bis 1,5 µm völlig ausreichend ist, wenn zuvor die Mehrzahl der thermolabilen Keime durch eine entsprechende thermische Behandlung abgetrennt worden ist. In Kombination dieses im Vergleich größeren Porendurchmessers mit einer Mikrofiltrationseinrichtung, die im Wesentlichen aus einer Keramikmembran besteht, wird gleichzeitig das Problem der häufigen Verstopfung gelöst.

Des Weiteren besteht das Vorurteil, dass die Abtrennung von Keimen mit Hilfe von Filtrationsschritten eine Temperatur von mindestens 55 °C erfordert, da nur unter diesen Bedingungen ausreichende Durchsätze erzielt werden können., während bei Temperaturen von beispielsweise 20 bis 30 °C nur Durchflusswerte von maximal 100 l/m²h erzielt werden. Die Filtration in der Wärme hat indes den wesentlichen Nachteil, dass die thermoresistenten Keime und Sporen nach etwa 4 Stunden Filtrationszeit beginnen, die Membranen zu durchwachsen und sich wieder im Permeat zu vermehren. Im Rahmen des erfindungsgemäßen Verfahrens besteht daher ein besonderer Vorteil darin, die Filtration in der Kälte, also bei 20 bis 30 °C durchzuführen, da das Durchwachsen der Keime auf diese Weise verhindert und dennoch überraschenderweise ein Durchfluss von 200 bis 300 l/m²h erzielt wird.

### Temperaturbehandlung und Trocknung

Im Verlauf der Mikrofiltration wird ein von den Keimen und Sporen befreites oder zumindest weitgehend befreites Permeat erhalten, das weiter verarbeitet wird, sowie ein Retentat, welches den Sporenschlamm enthält und verworfen wird. Das Permeat wird im Anschluss einer Temperaturbehandlung bei 70 bis 80 und vorzugsweise 72 bis 75 °C unterzogen, um das Produkt für die anschließende Trocknung aufzuheizen, wobei die Milchpulver erhalten werden.

In der vorliegenden Erfindung setzt man dem Permeat den zuvor in der Stufe (a) abgetrennten Rahm wieder zu. Entscheidend ist, dass die Mager- und nicht die Vollmilch der Mikrofiltration unterworfen wird. Würde man auf die Abtrennung des Rahms verzichten, würde die hohe Fettbelastung dazu führen, dass die Poren der Filtrationsmembranen verstopfen. Da auch im Rahm noch Keime enthalten sein können, wird dieser vor dem Zusammenführen mit dem Permeat einer Temperaturbehandlung über einen Zeitraum von 1 bis 10, vorzugsweise 3 bis 5 Sekunden bei 85 bis 138 °C unterworfen. Die hohen Temperaturen sind hier nicht von Bedeutung, da der Rahm nur Lipide und keine hitzeempfindlichen Proteine enthält.

Nach der Temperaturbehandlung wird das erwärmte Konzentrat in ein trockenes Pulver überführt. Hierfür kommen Bandtrocknung, Gefriertrocknung und insbesondere Sprühtrocknung in Frage.

Die Pulver enthalten in der Regel eine Restfeuchte von 1 bis 5, vorzugsweise 2 bis 3 Gew.-%, in welchem das Fett in Form von Einschlüssen mehr oder weniger gleichmäßig in den fettfreien Trockensubstanzen, d.h. Proteinen, Zuckern und Salzen verteilt ist. Den homogenisierten Konzentraten können vor dem Versprühen auch weitere Zusatzstoffe zugesetzt werden, wie beispielsweise Lecithine oder Lebensmittelemulgatoren [EP 1314367 A1, Nestle]

### Gewerbliche Anwendbarkeit

Ein weitere Ausgestaltungsvariant der vorliegenden Erfindung betrifft keimarme Niedrigtemperatur Vollmilchpulver, die jeweils einen Molkenproteinindex oberhalb von 2, vorzugsweise im Bereich 3 bis 7,5 und insbesondere im Bereich von 5 bis 7 aufweisen.

Magermilchpulver werden erhalten, indem man
(a) Rohmilch in an sich bekannter Weise von Feststoffen befreit, den Rahm abtrennt,
(b) die so erhaltene Magermilch einer Mikrofiltration unterwirft,
(c) das so erhaltene Permeat pasteurisiert,
(c) das so erhaltene pasteurisierte Permeat auf eine Trockenmasse von 30 bis 50 Gew.-% konzentriert und das Retentat verwirft,
(d) das so erhaltene Konzentrat einer Temperaturbehandlung über einen Zeitraum von mindestens 15 und vorzugsweise 15 bis 20 Sekunden bei mindestens 72 und vorzugsweise 72 bis 80 °C unterwirft, und
(e) das so erhaltene temperaturbehandelte Produkt zu einem trockenen Pulver verarbeitet.
Die erfindungsgemässe Vollmilchpulver werden auf gleichem Wege erhalten, lediglich wird der im Schritt (a) abgezogene Rahm wie oben erläutert zunächst einer Hochtemperaturerhitzung unterworfen, bevor er dem Permeat aus der Mikrofiltration wieder zugesetzt wird. In diesem Fall liegt der bevorzugte MPI/WPNI bei 5 bis 6,5.

### Beispiele

### Vergleichsbeispiel V1

Rohmilch wurde in an sich bekannter Weise von festen Bestandteilen befreit, pasteurisiert und entrahmt, so dass eine Magermilch mit einer Trockenmasse von ca. 9 Gew.-% resultierte. Diese wurde schonend auf eine Trockenmasse von ca. 40 Gew.-% eingedampft. Das so erhaltene Konzentrat wies einen MPI von 6,1 auf wurde über einen Zeitraum von etwa 5 Sekunden einer Hocherhitzung bei 120 °C unterworfen und dabei Sporen und andere Keime quantitativ zerstört. Es wurde ein keimfreies Konzentrat erhalten, das anschließend über einen Turm versprüht wurde. Es wurde ein praktisch keimfreies Hochtemperatur Magermilchpulver mit einem MPI/WPNI von nur 1,3 erhalten.

### Vergleichsbeispiel V2

Beispiel V1 wurde wiederholt, statt der Hocherhitzung bei 105 °C jedoch eine Temperaturbehandlung über ebenfalls 5 Sekunden bei 70 °C durchgeführt. Nach dem Versprühen wurde ein Niedrigtemperatur Magermilchpulver mit einem MPI/WPNI von 5,9 erhalten, das jedoch keimbelastet und daher für den Verzehr nur eingeschränkt geeignet war. Vergleichsbeispiel **1: Herstellung eines keimarmen Magermilchpulvers** Beispiel V2 wurde wiederholt, die Magermilch jedoch vor der Eindampfungsstufe einer Mikrofiltration unter Einsatz einer Keramikmembran mit einer Porenweite von 1,3 bis 1,5 µm unterworfen. Das Retentat wurde verworfen, das Permeat eingedampft und dann wie oben beschrieben bei ca. 70 °C temperaturbehandelt und versprüht. Es wurde ein Low Temperature Magermilchpulver mit einem MPI/WPNI von 6,8 erhalten, das praktisch keimfrei war. Erfindungsbeispiel **2: Herstellung eines keimarmen Vollmilchpulvers** Rohmilch wurde in an sich bekannter Weise von festen Bestandteilen befreit, pasteurisiert und entrahmt, so dass eine Magermilch mit einer Trockenmasse von ca. 9 Gew.-% resultierte. Diese wurde wie in Beispiel 1 beschrieben einer Mikrofiltration unterworfen und das Permeat weiterverwendet. Der bei der Herstellung der Magermilch angefallene Rahm wurde einer Hocherhitzung bei 125 °C unterworfen und dem Permeat wieder zugesetzt, so dass eine Vollmilch resultierte, die wiederum bei 70 °C temperaturbehandelt und versprüht wurde. Es wurde ein Niedrigtemperatur Vollmilchpulver mit einem MPI/WPNI von 6,3 erhalten, das praktisch keimfrei war.

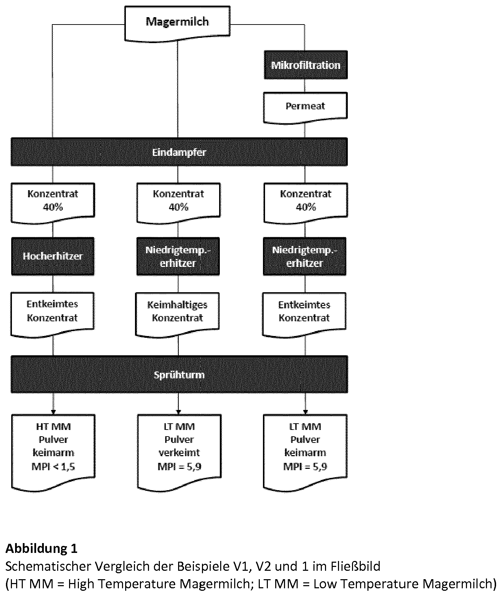

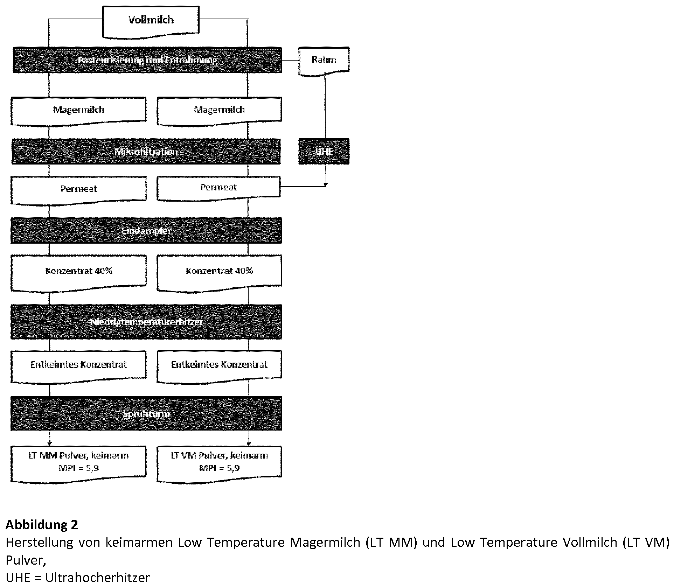

Die Beispiele V1, V2 und 1 werden in der Abbildung 1 noch einmal mit einem Flussdiagramm gegenübergestellt. Abbildung 2 zeigt die Unterschiede bei der Herstellung von Magermilch- und Vollmilchpulvern.

## Patentansprüche

1. Verfahren zur Herstellung keimarmer Vollmilchpulver mit einem Molkenproteinindex (MPI) von mindestens 2, bei dem man
(a) Rohmilch in an sich bekannter Weise von Feststoffen befreit, den Rahm abtrennt,
(b) die so erhaltene Magermilch einer Mikrofiltration unterwirft,
(c) das so erhaltene Permeat pasteurisiert,
(d) das so erhaltene pasteurisierte Permeat auf eine Trockenmasse von 30 bis 50 Gew.-% konzentriert und das Retentat verwirft,
(e) den in der Stufe (a) abgetrennten Rahm einer Hochtemperaturerhitzung unterwirft und dem Permeat vor der Temperaturbehandlung wieder zusetzt,
(f) das so erhaltene Konzentrat einer Temperaturbehandlung über einen Zeitraum von mindestens 15 Sekunden bei mindestens 72 °C unterwirft, und
(g) das so erhaltene temperaturbehandelte Produkt zu einem trockenen Pulver verarbeitet.

2. Verfahren nach Anspruch 1, **dadurch gekennzeichnet, dass** man die Mikrofiltration mittels einer Membran durchführt, die einen Porendurchmesser von 1,1 bis 2 µm aufweist.

3. Verfahren nach Anspruch 2, **dadurch gekennzeichnet, dass** die Mikrofiltration mittels einer Membran durchführt, die einen Porendurchmesser von 1,3 bis 1,5 µm aufweist.

4. Verfahren nach mindestens einem der Ansprüche 1 bis 3, **dadurch gekennzeichnet, dass** man die Mikrofiltration bei Temperaturen im Bereich von 20 bis 30 °C durchführt.

5. Verfahren nach mindestens einem der Ansprüche 1 bis 4, **dadurch gekennzeichnet, dass** man eine Keramikmembran einsetzt.

6. Verfahren nach mindestens einem der Ansprüche 1 bis 5, **dadurch gekennzeichnet, dass** man den Rahm einer Temperaturbehandlung über einen Zeitraum von 1 bis 10 Sekunden bei 85 bis 145 °C unterwirft.

7. Verfahren nach mindestens einem der Ansprüche 1 bis 6, **dadurch gekennzeichnet, dass** man das Konzentrat durch Versprühen zu einem trockenen Pulver verarbeitet.

8. Keimarmes Niedrigtemperatur Vollmilchpulver, erhältlich nach dem Verfahren der Ansprüche 1 bis 7.

9. Vollmilchpulver nach Anspruch 8, **dadurch gekennzeichnet, dass** es einen MPI/WPNI im Bereich von 3 bis 7,5 aufweist.

10. Vollmilchpulver nach Anspruch 8, **dadurch gekennzeichnet, dass** es einen MPI/WPNI im Bereich von 5 bis 6,5 aufweist.

## Claims

1. A process for the production of low-bacteria whole milk powders having a whey protein Index (MPI) of at least 2, wherein
(a) solids are removed from raw milk in a method known in itself, followed by a separation of the cream,
(b) the thus-obtained skimmed milk is subjected to microfiltration,
(c) the obtained permeate is pasteurized,
(d) the thus-obtained pasteurized permeate is concentrated to a dry mass of from 30 to 50% by weight, discarding the retentate,
(e) the cream separated in step (a) is subjected to ultra-high heat treatment and added to the permeate again before heat treatment,
(f) the thus-obtained concentrate is subjected to thermal treatment for a period of at least 15 seconds at a temperature of at least 72 °C, and
(g) the obtained thermally treated product is processed to obtain a dry powder.

2. The process according to claim 1, **characterized in that** the microfiltration is performed by a membrane having a pore diameter of from 1.1 to 2 µm.

3. The process according to claim 2, **characterized in that** the microfiltration is performed by a membrane having a pore diameter of from 1.3 to 1.5 µm.

4. The process according to at least one of claims 1 to 3, **characterized in that** the microfiltration is performed at temperatures in the range of from 20 to 30 °C.

5. The process according to at least one of claims 1 to 4, **characterized in that** a ceramic membrane is used.

6. The process according to at least one of claims 1 to 5, **characterized in that** the cream is subjected to a thermal treatment for a period of from 1 to 10 seconds at a temperature of from 85 to 145 °C.

7. The process according to at least one of claims 1 to 6, **characterized in that** the concentrate is processed to a dry powder by spraying.

8. A low-bacteria low-heat whole milk powder, obtainable according to the process of claims 1 to 7.

9. Whole milk powder according to claim 8, **characterized in that** it has a MPI/WPNI in the range of from 3 to 7.5.

10. Whole milk powder according to claim 8, **characterized in that** it has a MPI/WPNI in the range of from 5 to 6.5.

## Revendications

1. Procédé de fabrication d'une poudre de lait entier pauvre en germes ayant un indice de protéine de lactosérum (MPI) d'au moins 2, selon lequel
(a) du lait brut est débarrassé des solides d'une manière connue en soi, la crème est séparée,
(b) le lait écrémé ainsi obtenu est soumis à une microfiltration,
(c) le perméat ainsi obtenu est pasteurisé,
(d) le perméat pasteurisé ainsi obtenu est concentré à une masse sèche de 30 à 50 % en poids et le rétentat est mis au rébus,
(e) la crème séparée à l'étape (a) est soumise à un chauffage à température élevée et rajoutée au perméat avant le traitement thermique,
(f) le concentré ainsi obtenu est soumis à un traitement thermique pendant une durée d'au moins 15 secondes à au moins 72 °C, et
(g) le produit traité thermiquement ainsi obtenu est transformé en une poudre sèche.

2. Procédé selon la revendication 1, **caractérisé en ce que** la microfiltration est réalisée au moyen d'une membrane qui présente un diamètre de pores de 1,1 à 2 µm.

3. Procédé selon la revendication 2, **caractérisé en ce que** la microfiltration est réalisée au moyen d'une membrane qui présente un diamètre de pores de 1,3 à 1,5 µm.

4. Procédé selon au moins l'une quelconque des revendications 1 à 3, **caractérisé en ce que** la microfiltration est réalisée à des températures dans la plage allant de 20 à 30 °C.

5. Procédé selon au moins l'une quelconque des revendications 1 à 4, **caractérisé en ce qu'**une membrane céramique est utilisée.

6. Procédé selon au moins l'une quelconque des revendications 1 à 5, **caractérisé en ce que** la crème est soumise à un traitement thermique pendant une durée de 1 à 10 secondes à une température de 85 à 145 °C.

7. Procédé selon au moins l'une quelconque des revendications 1 à 6, **caractérisé en ce que** le concentré est transformé en une poudre sèche par pulvérisation.

8. Poudre de lait entier basse température pauvre en germes, pouvant être obtenue par le procédé selon les revendications 1 à 7.

9. Poudre de lait entier selon la revendication 8, **caractérisée en ce qu'**elle présente un MPI/WPNI dans la plage allant de 3 à 7,5.

10. Poudre de lait entier selon la revendication 8, **caractérisée en ce qu'**elle présente un MPI/WPNI dans la plage allant de 5 à 6,5.
